# EUROPEAN PATENT APPLICATION

(11) **EP 2 208 524 A1**
(43) Date of publication of application: **21.07.2010**
(21) Application number: 09174006.8
(22) Date of filing: 14.11.2003
(51) Int. Cl.: B01F 3/04, C02F 1/74

(54) **Water treatment apparatus comprising dispersion elements for water**

(30) Priority: 12.12.2002 FI 20020498 U
(62) Divisional of application: 03396103.8
(71) Applicant: Preseco Oy, 02150 Espoo (FI)
(72) Inventor: Lahtinen, Heikki, 15820 Lahti (FI)
(74) Representative: Hjelt, Pia Dorrit Helene

(57) **Abstract**

The object of the invention is a water treatment apparatus wherein the water is dispersed into the gas phase, separated from the gas and further treated.

## Description

### Technical background

The object of the invention is a water treatment apparatus, which comprises one or more containers equipped with gas space, which containers have as part of them one or more water treatment units for treating water.

In water treatment, as for example, the treatment of drinking water and wastewaters, a wide range of different apparatus are used for the improvement of water quality. For example, efforts are made to remove harmful compounds from water or to change its pH value, in order to improve its qualities. Apparatus are also used for the improvement of the appearance of water, e.g. to improve its taste, odor and appearance qualities.

In the treatment of drinking water it is often important to reduce the amount of manganese and iron contained by water. These cause both technical problems in the water transfer apparatus and also taste and odor nuisance and sometimes even health hazards in the drinking water itself. It is sometimes also necessary to remove or convert organic compounds contained by drinking water, which may cause odor or taste nuisance. In some cases it also is necessary to remove compounds and microorganisms contained by water that are harmful for health. For example, chemical precipitation and mechanical filtration are used to remove these compounds from water. Oxidation of water, either chemically or mechanically, is also used, to allow precipitation of e.g. iron and manganese from water. Often these methods are, however, technically complicated and also expensive and susceptible to incident. In addition, the facilities are expensive to operate, due to the use of chemicals and the power demand of blowers and compressors necessary for aeration and washing of filters, as well as the consumption of wash waters.

Traditionally, for example in the treatment of drinking water, aeration nozzles are used for aeration, conducting excess-pressure air through the nozzles in the water, in order to divide the air into bubbles. From the bubbles oxygen is diffused in water and thus occurs oxidation of compounds contained by water. Instead of air, also oxygen can be used for aeration, either as pure oxygen or partly mixed with air. In these apparatuses the so-called oxidation capacity is often dependent on the amount of available air/oxygen, thus making it often necessary to feed great amounts of air in the water to achieve a satisfactory oxidation result. The use of great amounts of air requires big and expensive apparatus.

Filtration is based principally on physical and chemical reactions between filtering grains and the filtered substance. For example, sand, plastic filling materials and ceramic bodies can be used as filtering material.

By means of filters it is possible to treat even great amounts of water, for example in the removal of iron and manganese. The filter can be e.g. a slow filter, where the filtration rate of water is in the range of 0.1 - 0.5 m/h. A significant part of the purification in slow filters is based on biological activity taking place on the surface of the filter. In rapid filters the filtration rate is essentially higher than in slow filtering. The filtration rate can be, for example, 2 - 50 m/h. Biological activity does not have so great importance in a rapid filter as in slow filtering.

Also, in view of the functioning of the apparatus, it is essential how efficiently the apparatus can be cleaned. Precipitate accumulated in the filters reduces filter output by increasing relative speed of water. Also the contact of filtering material and water decreases, which also diminishes filter output. Consequently, by intensifying the washing and simultaneously accelerating it, we can effectively improve the economy and output of the operation. Filter cleaning can be done by water or by air or by their combination. During the cleaning period the apparatus is out of use, and also wastewaters are formed in it, which must be conducted among wastewaters.

### Description of the invention

A water treatment apparatus has now been invented, where water can be treated in multifaceted ways. Features that are characteristic of the invention for the achievement of this goal are presented in the separate patent claims. Other patent claims describe some preferable application forms of the invention.

The water treatment apparatus defined by the invention can be used in many kinds of targets. It is especially suited for treatment of clean water, but it can also be used for the treatment of wastewaters. It is suitable for oxidation of water and it is preferable also for removal of pollutants capable of gasification.

According to one object of the invention, an ejector has been attached to the container, into which ejector gas can be conducted, like preferably air and water, and from which ejector the gas-water mixture can be conducted by a connection device essentially below the water treatment unit, for washing the water treatment unit and/or container.

In the apparatus according to the invention, the gas-water mixture can be put in an especially strong movement in a connection device, like a pipe or hose, before it gets to the space below the water treatment unit. Also the water below the bio-filter is made to flow, because of the force directed at it, effectively upwards into the bio-filter. As the pressure decreases, more gas is released as micro-bubbles from the water of the upwards flowing gas-water mixture, which further accelerates the water flow and, at the same time, intensifies washing of the bio-filter.

Corresponding increase of washing output can, within the framework of the invention, be used also in other kinds of applications, without restricting in any way the scope of protection of the invention. The water treatment unit defined by the invention can be a filter, such as a mechanical filter or preferably a bio-filter, sieve, screen, flotation apparatus, coagulation apparatus, flocculation apparatus, ion exchange apparatus, reverse osmosis apparatus and/or ultra-filtration apparatus. It can also preferably be a de-acidification apparatus.

The ejector can be preferably installed essentially in the upper part of the container and linked to the lower part of the container by a connection device, so that from the ejector the gas-water mixture can be conducted by means of the connection device to the lower part of the container, in order to intensify the washing of the water treatment unit and/or the container. The upwards flowing water and gas bubbles effectively mix e.g. the bio-filter mass and they also efficiently transport dirt material to the discharge unit, such as an overflow groove and discharge connection. This solution also provides the advantage that the connection device is as long as possible, whereupon the acceleration distance of the gas-water mixture is preferably long.

According to one preferable object of the invention, a bio-filter has been attached to the container of the water treatment apparatus, and an ejector has been installed above the upper surface (8u) of the bio-filter (8), and the gas-water mixture can be conducted from the ejector below the lower surface of the bio-filter, through a connection device installed in the bio-filter, for washing the bio-filter.

According to one object of the invention, a vacuum connection is attached to the container for removing gas. An under-pressure is created in the vacuum connection by means of a vacuum device. This has special advantage, because this way the stinking and harmful gases formed during washing, can be effectively collected and conducted out of the water treatment apparatus. Gases formed in washing can smell very bad and they can even contain substances that are dangerous to health. By means of an under-pressure, the pressure of the container can be decreased, whereupon gas can be more effectively released from the gas-water mixture. This also, in turn, improves the washing output of the apparatus, because the flowing of the mixture is intensified and the washing event itself is also intensified because of the gas released into homogeneous micro-bubbles.

The water-air mixture can be conducted from the ejector below the bio-filter also through a connecting device attached outside the container. Preferably, water-air mixture can be conducted from the ejector below the bio-filter through a connecting device installed inside the bio-filter.

The uptake of wash water by well-known techniques, for example, in rapid sand filters, is e.g. 5 - 8 % of the amount of treated water. In continuous-washing filters the uptake of wash water can be even 15 - 20% of the amount of the treated water. By means of the now invented washing technique, the uptake of wash water can be about 1 - 2% of the amount of the treated water. This technical implementation has an essential impact on the total costs of the treatment and on the total output of the apparatus.

In a water treatment apparatus where water filtration rate is e.g. 8 - 15 m/h, it is possible to achieve a good wash result by the apparatus defined by the invention, typically by a 10 - 15 minute washing time. In this case the corresponding wash water uptake is 10 - 20 m³.

In one or more containers of the water treatment apparatus defined by one object of the invention, water is dispersed by a water disperser into a gas space, e.g. as mist or drops. The water-gas mixture is directed against the surface above the water disperser, whereupon, due to mechanical hydraulic impact, further dispersion takes place. An exhaust blower can be preferably placed in the upper part of the gas space, whereupon the newly dispersed water-gas mixture floats to the lower part of the gas space in gas countercurrent. A nozzle equipped with a vacuum funnel is preferably used as the water disperser.

Structurally, the container defined by the invention is relatively simple. In the container of the water treatment apparatus defined by one object of the invention, there are in the container of the water treatment apparatus, which contains gas space, essentially in the lower part, one or more water dispersers, for the purpose of dispersing the supplied water into the gas space, and for leading it essentially into one or more dispersion elements in the upper part of the container, for further treatment of the water dispersed into gas space. The water directed from the lower part to the upper part is first in the ascension phase in contact with gas and, when leaving the oxidation element, it has second-phase contact with gas. It is preferable to direct the treated water upwards in the central space of the container and downwards in the lateral space, which allows for a low apparatus structure.

According to one object of the invention, the container has a de-acidification apparatus for changing the pH value of the treated water.

According to one object of the invention, the container of the water treatment apparatus has a filter, such as a bio-filter, for filtering the treated water. The cleaning of the bio-filter can be intensified by periodical drying or/and drying enhanced by counter-current air. Drying reinforces the transport for removal of solid substances formed in the filter, for example into the filter of the next step of the process.

According to one object of the invention, in the water treatment apparatus one or more gas transfer devices have been attached to the container, for the purpose of conducting gas, such as oxygen and/or ozone of air into the container. This way oxidation of water can be essentially intensified. Gas can also be conducted into the container without separate gas transfer devices. In some cases, it is preferable to supply ozone into the container either exclusively or as added to air. Ozone not only has an oxidation effect, but also a des-infective impact on water, which means that water can be treated in many-sided ways and effectively by it.

According to one object of the invention, gas has been conducted into the container of the water treatment apparatus, essentially into the lower part of the gas space. This way a countercurrent is created between the treated water and the oxidizing gas. This intensifies oxidation essentially.

According to one object of the invention, gas has been removed from the container of the water treatment apparatus, essentially from the upper part of the gas space. Also this creates a countercurrent between the treated water and the oxidizing gas. This intensifies oxidation essentially. According to one object of the invention, gas has been conducted into the container of the water treatment apparatus, into the lower part of the gas space, and gas has been removed from the container from the upper part of the gas space. This correspondingly intensifies the oxidation of water.

According to one object of the invention, the cover of the oxidation container and/or the wall of the container function as the dispersion element of the water treatment apparatus. These can be designed so that they disperse the water directed at them as effectively as possible, which contributes to good oxidation capacity of the apparatus. They can also be designed to scatter the water directed at them with maximum efficiency. Design can also be used to prevent water from flowing along the walls of the container, instead making it fall in the gas space in the container.

According to one object of the invention, there is in the container of the water treatment apparatus a drop separator for the treatment of gas exiting from the container. The dispersion element preferably functions as drop separator. This leads to simple structures.

According to one object of the invention, one or more treatment units have been attached to the container of the water treatment apparatus. Depending on the application target, the treatment unit can be attached to the container defined by the invention, either as a preliminary phase or an after-phase. Such an apparatus entity can be assembled in very adaptable ways, thus creating versions suitable for different targets of use. The treatment unit can be e.g. a filter, precipitation apparatus, reverse-osmosis apparatus or electro-dialysis apparatus. This further expands the application field of the invention.

The attached filter can preferably be a rapid filter or it can also be e.g. a slow filter. The filter can be one-layered or multi-layered.

According to one object of the invention, in the filter attached to the container and/or in a separate container attached to the container, counter-current rinsing can be used for cleaning. Other cleaning methods can also be used. Cleaning can be enhanced by conducting into the filter element e.g. air mixed with water, so-called dispersion water and air mixture.

According to one object of the invention, an ejector is installed in the container of the water treatment apparatus, where air and water can be conducted, and which air-water mixture can be conducted into the container for oxidation of water and/or washing of the treatment unit attached to the container. In this kind of ejector, the pressure can be e.g. 3 - 6 bar. In the ejector the air-water mixture can be put in a very strong movement, which enhances oxidation of water and intensifies washing.

The water treatment apparatus defined by the invention can be used in a wide range of targets. Accordingly, it is suitable for purification of drinking water or posttreatment of wastewaters. The size of the apparatus is freely variable and its capacity can be freely designed, according to each target. For example, in the treatment of drinking water, the container volume can be 0.5 - 100 m3. The apparatus is excellent for removing e.g. iron and manganese from tap water. Concurrently, also other water properties improve, because e.g. potential volatile acids exit from water during the treatment, whereupon the pH value of water rises on its part. It is also extremely easy to maintain, because there are no parts in the apparatus that wear out. Other benefits of the water treatment apparatus include small energy consumption. The apparatus has no need for separate aeration compressors and neither for washing air compressors. Depending on its application, it is also totally free from chemicals, so that its operating costs are essentially smaller compared with traditional processes.

In the following section one application of the invention will be described in detail, by referring to the attached drawings.

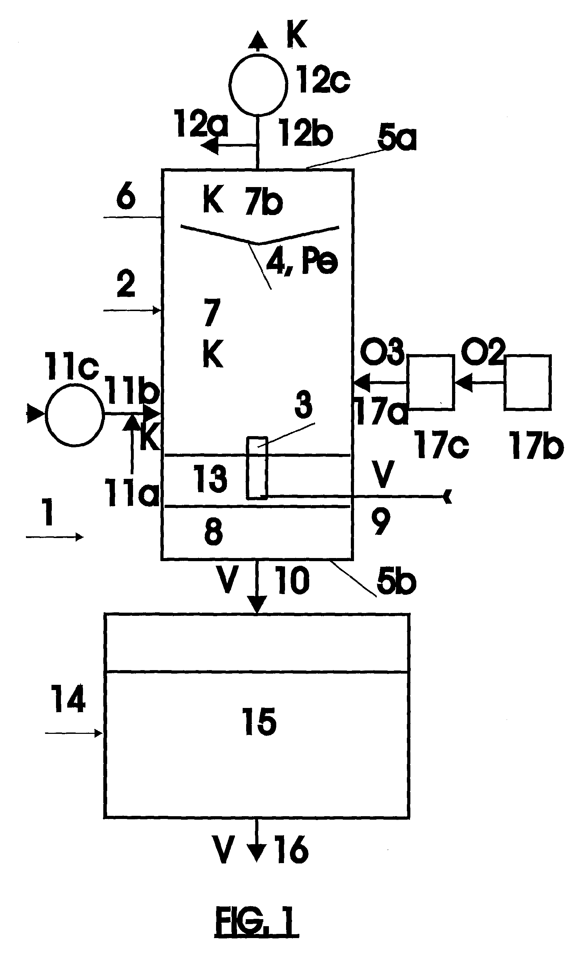

Figure 1 presents a water treatment apparatus, which has a water disperser and a dispersion element.

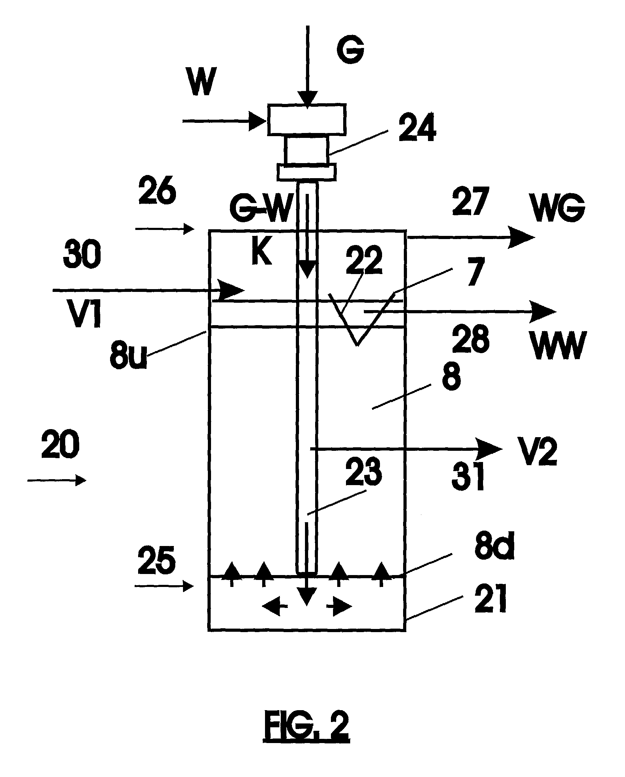

Figure 2 presents a water treatment apparatus, which has a bio-filter as the water treatment unit.

Apparatus 1 comprises a container 2, which has a wall 6, a cover 5a and a bottom 5b. Into the container 2 has been fitted a water disperser 3, above which in gas space 7 is a dispersion element 4. Water V is conducted by pipe 9 first into the water disperser 3, from where it is directed to the disperser element 4 in the gas space 7 of container 2. From there 4, drop-water V falls to a de-acidification apparatus 13 in lower part of container 2a and flows further into the filter 8. Dispersion element 4 concurrently functions as drop separator Pe. By pipe 11b gas K, such as air, can be supplied by pipe 11a or by excess-pressure device 11c. From container 2 gas K exits from gas space 7 to drop-separator space 7b and further by means of pipe 12b either into pipe 12a or into a vacuum device 12c. To the apparatus 1 has been attached an oxygen container 17b, from where oxygen O₂ can be conducted into ozonization apparatus 17c and ozone O₃ further through pipe 17a into the gas space 7 of the container 2. From the container 2, water V is conducted through pipe 10 into slow filter 14 containing filter mass 15, from where water is further conducted away through pipe 16.

In the apparatus 20 there is a container 21, in which has been installed a bio-filter 8. In the bio-filter 8 has been installed an ejector 24 in the upper part 26 of the container, and to it has been linked a connection pipe 23, which has been installed in the center of the bio-filter 8. The gas-water mixture G-W that forms in the ejector 24 from gas G and water W conducted into it, can be conducted by means of the connection pipe 23 essentially below the lower surface 8d of the bio-filter 8 in the lower part 25 of the container, for the purpose of washing the bio-filter 8.

In the washing phase of the bio-filter 8, the gas-water mixture G-W is carried in a countercurrent through the bio-filter 8, on top of the upper surface 8u of the bio-filter. The created washing wastewater WW is removed from the container 21 through an overflow groove 22 and a discharge connection 28. The formed waste gas WG is removed from the container 21 through a vacuum connection 27.

In the operating phase of the bio-filter 8, water V1 is conducted through the supply connection 30 on top of the upper surface 8u of the bio-filter 8, from where it goes through the bio-filter 8 below its lower surface 8d into the lower part 25 of the container. The treated water V2 is removed from the lower part 25 of the container through the connection pipe 23 and the discharge connection 31 of the ejector 24 from the container 21.

## Claims

1. Water treatment apparatus **characterized in that** to the water treatment apparatus are attached one or more containers (2, 21), in whose gas space (7) there are one or more dispersion elements (4), and below which there are one or more water dispersers (3) for the purpose of dispersing the supplied water (V) into the gas space (7) and conducting it to one or more dispersion elements (4) situated above the water disperser (3) in the gas space (7) of the container (2), for the further treatment of water (V) conducted into the gas space (7).

2. Water treatment apparatus according to claim 1 **characterized in that** to the container (2, 21) has been attached a vacuum connection (26) for removing gas (G) by means of under-pressure from the container (2, 21).

3. Water treatment apparatus according to any one of the preceding claims **characterized in that** there is a drop separator (Pe) in the container (2) for separating water (V) from gas (K).

4. Water treatment apparatus according to any one of the preceding claims **characterized in that** the water treatment unit (3, 4, 8, 13) is a mechanical filter, bio-filter, screen, sieve and/or de-acidification apparatus.

5. Water treatment apparatus according to any one of the preceding claims **characterized in that** one or more gas transfer devices (11c, 12c, 17c) are attached to the container (2) for conducting gas (K), such as air, oxygen and/or ozone, into the container and/or from the container (2).

6. Method for treatment of water, **characterized in that** as a water treatment apparatus is used the water treatment apparatus defined by any one of claims 1 to 5.
